# FASCICULE DE BREVET EUROPEEN

(11) **EP 4 010 576 B1**
(45) Date de publication et mention de la délivrance du brevet: **31.12.2025**
(21) Numéro de dépôt: 20820245.7
(22) Date de dépôt: 31.07.2020
(51) Int. Cl.: F02K 1/72, F02K 1/76

(54) **INVERSEUR DE POUSSÉE COMPRENANT AU MOINS UN ORGANE D'AMORÇAGE POUR AMORCER LA FERMETURE D'UNE STRUCTURE EXTERNE MOBILE DE CET INVERSEUR**
SCHUBUMKEHRVORRICHTUNG MIT MINDESTENS EINEM INITIATOR ZUM AUSLÖSEN DES SCHLIESSENS EINER BEWEGLICHEN ÄUSSEREN STRUKTUR DIESER SCHUBUMKEHRVORRICHTUNG
THRUST REVERSER COMPRISING AT LEAST ONE INITIATOR TO INITIATE THE CLOSING OF A MOBILE EXTERNAL STRUCTURE OF THIS REVERSER

(30) Priorité: 05.08.2019 FR 1908981
(43) Date de publication de la demande: 15.06.2022
(73) Titulaire: Safran Nacelles, 76700 Gonfreville-l'Orcher (FR)
(72) Inventeur: CHARLIAC, Fabien, 77550 Moissy-Cramayel (FR); BREBION, Benjamin, 77550 Moissy-Cramayel (FR); MARLAY, Thomas, 77550 Moissy-Cramayel (FR); CARUEL, Pierre Charles, 77550 Moissy-Cramayel (FR); BRAVIN, Fabien, 77550 Moissy-Cramayel (FR)
(74) Mandataire: Santarelli
(86) Numéro de dépôt international: PCT/FR2020/051417
(87) Numéro de publication internationale: WO 2021/023934

(56) Documents cités:
- EP-A1- 3 034 848
- EP-A1- 3 719 293
- EP-B1- 3 034 848
- FR-A1- 3 062 637
- US-A1- 2017 074 211

## Description

### Domaine technique

L'invention se rapporte au domaine des inverseurs de poussée pour ensemble propulsif d'aéronef. L'invention se rapporte plus spécifiquement au mécanisme de déplacement de la structure externe mobile d'un tel inverseur.

### État de la technique antérieure

De manière générale, un inverseur de poussée peut être placé dans une configuration de jet direct, permettant à l'ensemble propulsif de générer une poussée, et dans une configuration de jet inversé - ou d'inversion de poussée - dans laquelle une partie des gaz circulant dans l'ensemble propulsif est redirigée vers l'avant de l'ensemble propulsif, générant ainsi une contre-poussée de freinage de l'aéronef.

Pour ce faire, les inverseurs comprennent généralement une structure externe mobile telle qu'un capot coulissant ou une porte pivotante. En jet direct, la structure externe mobile est dans une position de fermeture dans laquelle elle est configurée pour guider un écoulement de fluide dans l'ensemble propulsif, cet écoulement contribuant pleinement à la poussée. En jet inversé, la structure externe mobile est dans une position d'ouverture dans laquelle elle dégage une ouverture radiale configurée pour évacuer de l'ensemble propulsif une partie de l'écoulement de fluide de manière à générer la contre-poussée. Un inverseur de l'art antérieur est décrit dans le document FR 3062637 A1.

Dans un inverseur conventionnel, par exemple celui décrit dans le document WO 2011/064479 A1, le déplacement de la structure externe mobile entre la position de fermeture et la position d'ouverture est réalisé par des actionneurs tels que des vérins. Ces actionneurs sont typiquement configurés pour exercer sur la structure externe mobile soit un effort de poussée pour réaliser la course d'ouverture, c'est-à-dire pour déplacer la structure externe mobile de la position de fermeture à la position d'ouverture, soit un effort de traction pour réaliser la course de fermeture, c'est-à-dire pour déplacer la structure externe mobile de la position d'ouverture à la position de fermeture.

Lorsque la structure externe mobile est en position d'ouverture, celle-ci est exposée à des contraintes aérodynamiques pouvant générer un couple de basculement tendant à la faire pivoter. Ces contraintes peuvent ainsi entraîner un coincement de la structure externe mobile en position d'ouverture et un phénomène de broutage lors de l'initiation de la course de fermeture.

Ces phénomènes de coincement et/ou de broutage, dont il est tenu compte lors du dimensionnement des actionneurs, peuvent être amplifiés en cas de rupture ou de détérioration de l'un des actionneurs.

### Exposé de l'invention

L'invention vise à faciliter la fermeture de la structure externe mobile d'un inverseur de poussée, notamment en cas de coincement de cette structure externe mobile dans la position d'ouverture.

A cet effet, l'invention a pour objet un inverseur de poussée , selon les caractéristiques de la revendication 1, pour ensemble propulsif d'aéronef, cet inverseur comprenant une structure fixe et une structure externe mobile, cet inverseur étant configuré pour être placé dans :
- une configuration de jet direct dans laquelle la structure externe mobile est dans une position de fermeture, la structure externe mobile en position de fermeture étant configurée pour guider un écoulement de fluide dans l'ensemble propulsif de manière à générer une poussée,
- une configuration de jet inversé dans laquelle la structure externe mobile est dans une position d'ouverture, la structure externe mobile en position d'ouverture dégageant une ouverture radiale apte à évacuer une partie dudit écoulement de fluide de l'ensemble propulsif de manière à générer une contre-poussée.

Cet inverseur comprend au moins un actionneur configuré pour déplacer la structure externe mobile entre la position de fermeture et la position d'ouverture.

Selon l'invention, cet inverseur comprend au moins un organe d'amorçage, distinct de l'au moins un actionneur, configuré pour exercer sur la structure externe mobile un effort d'amorçage d'une course de fermeture dans laquelle la structure externe mobile est déplacée de la position d'ouverture vers la position de fermeture.

Autrement dit, l'inverseur comprend d'une part au moins un actionneur configuré pour réaliser une course d'ouverture et au moins une partie d'une course de fermeture. Lors de la course d'ouverture, l'au moins un actionneur peut déplacer la structure externe mobile de la position d'ouverture jusqu'à la position de fermeture. Lors de la course de fermeture, l'au moins un actionneur peut déplacer la structure externe mobile de la position de fermeture - ou d'une position intermédiaire proche de la position de fermeture (voir ci-après) - jusqu'à la position d'ouverture. D'autre part, l'inverseur comprend au moins un organe d'amorçage, distinct de l'au moins un actionneur, configuré pour initier ou contribuer à l'initiation de la course de fermeture en exerçant sur la structure externe mobile un effort d'amorçage impulsionnel, c'est-à-dire un effort transitoire exercé sur la structure externe mobile lors d'une phase initiale de la course de fermeture.

L'invention permet ainsi de pallier ou limiter les risques de coincement et/ou de broutage engendrés par des efforts de friction entre la structure fixe et la structure externe mobile. Ces phénomènes de coincement et/ou de broutage peuvent typiquement résulter d'une rupture ou d'une détérioration de l'un des actionneurs lorsque l'inverseur comprend une pluralité d'actionneurs, ou d'une usure anormale des revêtements des rails de guidage conduisant à une augmentation des frottements, ou d'une répartition asymétrique ou non uniforme de l'au moins un actionneur, par exemple lorsqu'un unique actionneur est prévu pour déplacer la structure externe mobile entre la position de fermeture et la position d'ouverture. Dans de telles conditions, la résultante des efforts s'exerçant sur la structure externe mobile en position d'ouverture peut entraîner un pivotement de la structure externe mobile, celle-ci étant typiquement en porte-à-faux lorsque l'inverseur est en configuration de jet inversé.

En amorçant la course de fermeture, l'au moins un organe d'amorçage permet en effet de décoincer la structure externe mobile en la réalignant, et de réduire le phénomène de broutage.

L'organe d'amorçage permet aussi de réduire le moment, appliqué à la structure fixe, qui tend à la déformer et à créer des réactions asymétriques dans les rails ainsi que des frottements trop importants susceptibles de rendre le mouvement irréversible.

Il en résulte une facilitation de la fermeture de la structure externe mobile.

Pour ce faire, l'au moins un organe d'amorçage peut typiquement être disposé de manière à exercer l'effort d'amorçage sur au moins une partie correspondante de la structure externe mobile susceptible d'être axialement décalée vers l'aval par rapport à d'autres parties de la structure externe mobile, l'aval étant défini relativement à un sens d'écoulement de fluide exerçant une contrainte aérodynamique sur cette structure externe mobile, ou plus généralement sur au moins une partie correspondante de la structure externe mobile sur laquelle un tel effort d'amorçage est susceptible de contrebalancer des efforts aérodynamiques pouvant s'appliquer sur la structure externe mobile de manière asymétrique ou non uniformément répartie.

L'invention permet aussi de réduire les dimensions de l'au moins un actionneur et donc sa masse, l'effort de fermeture requis étant moindre compte tenu de l'amorçage de la course de fermeture produit par l'au moins un organe d'amorçage. Il est ainsi possible de réduire la masse globale de l'inverseur.

L'au moins un actionneur et l'au moins un organe d'amorçage peuvent agir simultanément lors de la phase initiale de la course de fermeture.

Il est toutefois préféré de ne faire intervenir que l'au moins un organe d'amorçage pendant la phase initiale de la course de fermeture, et de mettre en œuvre l'au moins un actionneur lors d'une phase ultérieure consécutive.

Dans un mode de réalisation, l'au moins un organe d'amorçage est solidaire de l'une parmi la structure fixe et la structure externe mobile, l'au moins un organe d'amorçage pouvant être configuré pour :
- coopérer avec l'autre parmi la structure fixe et la structure externe mobile au cours d'une phase initiale de la course de fermeture, l'au moins un organe d'amorçage étant configuré pour exercer ledit effort d'amorçage au cours de cette phase initiale,
- être désolidarisé de l'autre parmi la structure fixe et la structure externe mobile au cours d'une phase ultérieure de la course de fermeture de la structure externe mobile.

De préférence, l'au moins un organe d'amorçage peut former une butée de fin de course d'ouverture limitant le déplacement de la structure externe mobile dans la position d'ouverture.

Une telle butée formée par l'au moins un organe d'amorçage permet de retenir la structure externe mobile et de reprendre les efforts exercés sur celle-ci lorsque l'inverseur est en jet inversé, ce qui permet notamment de réduire l'arc-boutement de la structure externe mobile en position d'ouverture.

Dans un mode de réalisation, l'au moins un organe d'amorçage peut être configuré pour amortir la structure externe mobile lors de son déplacement vers la position d'ouverture.

Un tel amortissement permet de limiter l'impact dynamique de la structure externe mobile sur la structure fixe. Il est ainsi possible de réduire les dimensions et donc la masse des éléments d'impact constitués par exemple par ladite butée formée par l'au moins un organe d'amorçage.

Les caractéristiques de butée et d'amortissement peuvent être combinées de sorte que l'au moins un organe d'amorçage forme dans un mode de réalisation une butée élastique.

Dans un mode de réalisation, l'au moins un organe d'amorçage peut être configuré pour accumuler de l'énergie mécanique lorsque la structure externe mobile est déplacée vers la position d'ouverture et pour restituer l'énergie mécanique ainsi accumulée de manière à exercer ledit effort d'amorçage.

Pour ce faire, l'au moins un organe d'amorçage peut par exemple comprendre au moins un ressort configuré pour accumuler et restituer ladite énergie mécanique.

Dans un mode de réalisation, l'au moins un organe d'amorçage peut comprendre au moins un vérin configuré pour exercer ledit effort d'amorçage.

Autrement dit, l'au moins un organe d'amorçage peut comprendre au moins un organe passif tel qu'un ressort ou actif tel qu'un vérin, étant entendu que ces modes de réalisation peuvent être combinés. Par exemple, l'inverseur peut comprendre un ou plusieurs organes d'amorçage comprenant chacun un ressort et un ou plusieurs autres organes d'amorçage comprenant chacun un vérin.

Dans un mode de réalisation, de préférence lorsque l'inverseur comprend un unique actionneur, l'actionneur et l'organe d'amorçage, ou l'actionneur et l'un des organes d'amorçage lorsque l'inverseur en comprend plusieurs, peuvent être diamétralement opposés l'un à l'autre.

Plus généralement, l'inverseur peut comprendre un actionneur et un organe d'amorçage tels que décrit ci-dessus, dans lequel cet actionneur et cet organe d'amorçage peuvent être diamétralement opposés l'un à l'autre.

Dans un mode de réalisation, la structure externe mobile peut comprendre un carénage et au moins un organe de liaison du carénage avec la structure fixe, l'au moins un organe de liaison de la structure externe mobile coopérant avec au moins un organe de liaison correspondant de la structure fixe de manière à guider le déplacement de la structure externe mobile entre la position de fermeture et la position d'ouverture selon une direction axiale, la structure externe mobile étant configurée pour autoriser un déplacement du carénage par rapport à l'au moins un organe de liaison de cette structure externe mobile en rotation autour d'un axe perpendiculaire à ladite direction axiale, ou oblique par rapport à cette direction axiale.

Une telle structure externe mobile autorise un débattement angulaire de son carénage par rapport à la structure fixe ce qui permet d'améliorer le déplacement de la structure externe mobile entre les positions d'ouverture et de fermeture compte tenu des efforts radiaux auxquels le carénage peut être soumis.

L'invention a aussi pour objet un ensemble propulsif d'aéronef, cet ensemble propulsif comprenant un inverseur selon la revendication 8.

L'invention a aussi pour objet un procédé de fermeture , selon les étapes de la revendication 9, d'une structure externe mobile d'un inverseur de poussée, ce procédé comprenant :
- une étape d'amorçage d'une course de fermeture de la structure externe mobile au cours de laquelle l'au moins un organe d'amorçage exerce ledit effort d'amorçage sur la structure externe mobile,
- une étape d'actionnement de l'au moins un actionneur de manière à déplacer la structure externe mobile vers la position de fermeture.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
La figure 1 est une vue schématique en coupe axiale d'un ensemble propulsif d'aéronef conforme à l'invention, cet ensemble propulsif comprenant un turboréacteur à double corps et à double flux ;
La figure 2 est une demi-vue schématique en coupe axiale d'un inverseur de poussée conforme à l'invention, dans une configuration de jet direct ;
La figure 3 est une demi-vue schématique en coupe axiale de l'inverseur de la figure 2, dans une configuration de jet inversé ;
La figure 4 est une vue schématique en perspective d'une partie d'un inverseur de poussée conforme à l'invention, montrant un mécanisme de guidage de la structure externe mobile de cet inverseur ;
La figure 5 est un agrandissement d'une partie de la figure 4, centré sur ledit mécanisme de guidage ;
La figure 6 est une vue schématique en perspective d'un ensemble propulsif de l'art antérieur, cet ensemble propulsif comprenant un inverseur de poussée dont la structure externe mobile est représentée dans une position de basculement ;
La figure 7 est une vue schématique en coupe axiale d'une partie d'un inverseur de poussée conforme à l'invention, cet inverseur comprenant un organe d'amorçage passif et une structure externe mobile dans une position d'ouverture ;
La figure 8 est une vue schématique en perspective de l'inverseur de la figure 7, montrant plus précisément un mécanisme de guidage de la structure externe mobile ;
La figure. 9 est une vue schématique d'un inverseur de poussée qui n'est pas conforme à l'invention,
cet inverseur comprenant un organe d'amorçage passif et une structure externe mobile dans une position de fermeture ;
La figure 10 est une vue schématique de l'inverseur de la figure 9, la structure externe mobile étant dans une position intermédiaire ;
La figure 11 est une vue schématique de l'inverseur de la figure 9, la structure externe mobile étant dans la position d'ouverture ;
La figure 12 est une vue schématique d'un inverseur de poussée qui n'est pas conforme à l'invention, qui se distingue de celui de la figure 9 en ce que la structure externe mobile comprend un carénage articulé par rapport à un organe de liaison de cette structure externe mobile avec une structure fixe de l'inverseur;
La figure 13 est une vue schématique d'un inverseur de poussée conforme à l'invention, cet inverseur comprenant un organe d'amorçage actif et une structure externe mobile dans une position de fermeture ;
La figure 14 est une vue schématique de l'inverseur de la figure 13, la structure externe mobile étant dans une position intermédiaire ;
La figure 15 est une vue schématique de l'inverseur de la figure 13, la structure externe mobile étant dans une position d'ouverture.

### Description détaillée de modes de réalisation

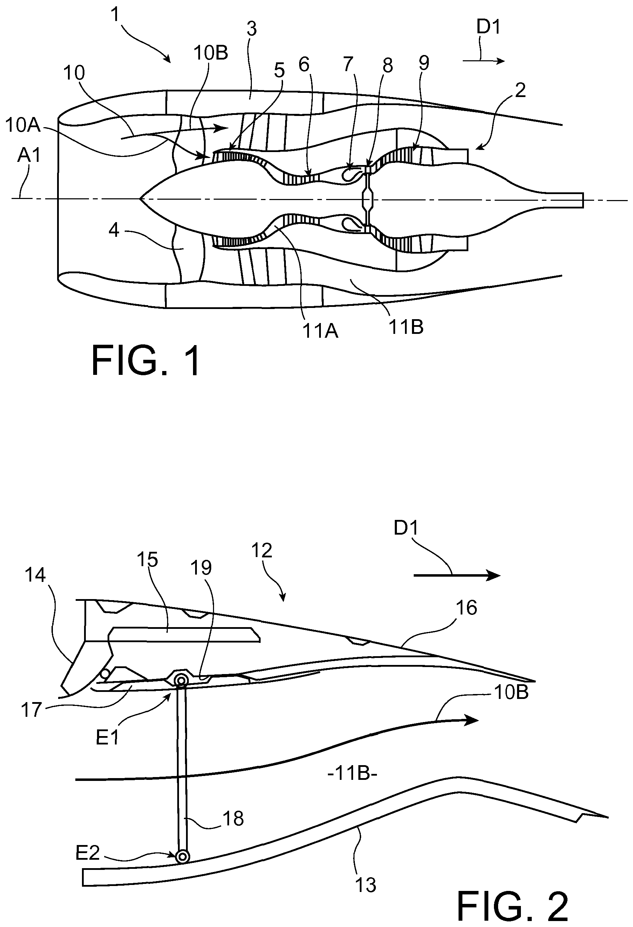

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux.

Par la suite, les termes « amont », « aval », « avant » et « arrière » sont définis par rapport à un sens D1 d'écoulement des gaz à travers l'ensemble propulsif 1 lorsque celui-ci est propulsé.

Le turboréacteur 2 présente un axe central longitudinal A1 autour duquel s'étendent ses différents composants, en l'occurrence, de l'amont vers l'aval du turboréacteur 2, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

De manière conventionnelle, lors du fonctionnement d'un tel turboréacteur 2, un écoulement d'air 10 pénètre dans l'ensemble propulsif 1 par une entrée d'air en amont de la nacelle 3, traverse la soufflante 4 puis se divise en un flux primaire 10A central et un flux secondaire 10B. Le flux primaire 10A s'écoule dans une veine primaire 11A de circulation des gaz traversant le générateur de gaz. Le flux secondaire 10B s'écoule quant à lui dans une veine secondaire 11B entourant le générateur de gaz et délimitée radialement vers l'extérieur par la nacelle 3.

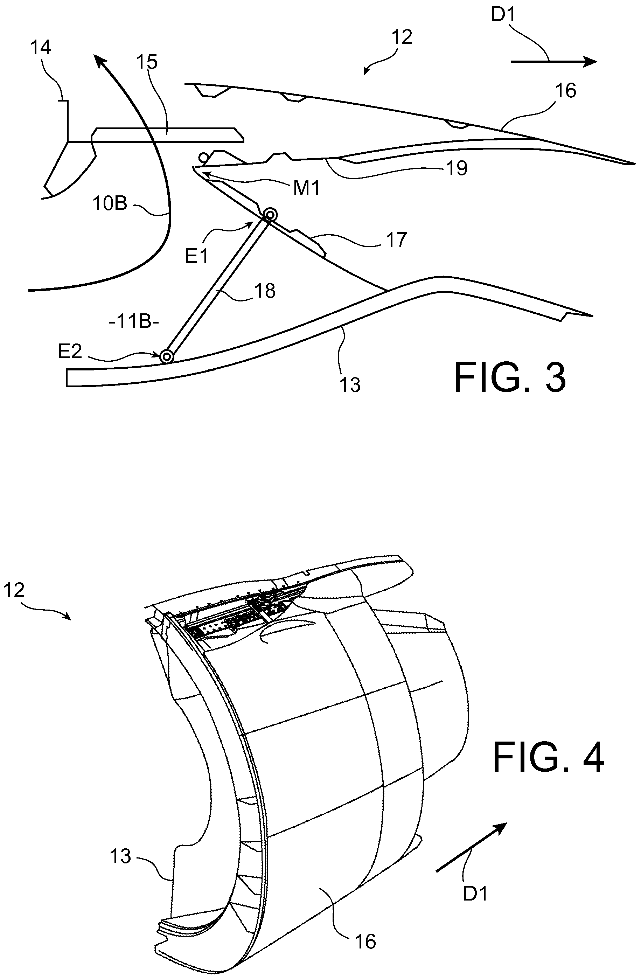

L'invention se rapporte à un inverseur de poussée 12 tel qu'illustré aux figures 2 et 3, ou à la figure 4, pour inverser la poussée générée par un tel ensemble propulsif 1.

En référence aux figures 2 et 3, l'inverseur 12 comprend d'une part des éléments fixes par rapport à un stator du turboréacteur 2, parmi lesquels une structure interne fixe 13, un cadre avant 14 et des grilles 15 portées par le cadre avant 14.

Cet inverseur 12 comprend d'autre part des éléments mobiles par rapport aux éléments fixes précités, parmi lesquels une structure externe mobile 16 formant dans cet exemple un capot mobile coulissant, des volets d'obturation 17 et des biellettes 18. Ces éléments mobiles permettent de modifier la configuration de l'inverseur 12.

La figure 2 montre l'inverseur 12 dans une configuration de jet direct. Dans cette configuration, le capot mobile 16 est dans une position de fermeture dans laquelle il est axialement en appui contre le cadre avant 14 en recouvrant les grilles 15.

En jet direct, le capot mobile 16 et la structure interne fixe 13 délimitent radialement entre elles une partie aval de la veine secondaire 11B.

Les volets d'obturation 17 sont dans une position rétractée dans laquelle ils sont logés dans une cavité 19 du capot mobile 16 de manière à ne pas obturer la veine secondaire 11B.

Ainsi, en jet direct, l'inverseur 12 permet de canaliser le flux secondaire 10B vers l'arrière de l'ensemble propulsif 1 de sorte que ce flux secondaire 10B contribue pleinement à la propulsion de l'aéronef.

La figure 3 montre l'inverseur 12 dans une configuration d'inversion de poussée, aussi appelée jet inversé. Dans cette configuration, le capot mobile 16 est dans une position d'ouverture dans laquelle il dégage une ouverture radiale constituée dans cet exemple par des ouvertures des grilles 15. En effet, la translation axiale du capot mobile 16, vers l'arrière de l'ensemble propulsif 1 par rapport au cadre avant 14, découvre les grilles 15 qui sont solidaires du cadre avant 14.

Le coulissement du capot mobile 16 de la position de fermeture (figure 2) vers la position de fermeture (figure 3) entraîne un déploiement des volets d'obturation 17 dans la veine secondaire 11B. Pour ce faire, les volets d'obturation 17 sont articulés au capot mobile 16 en un point d'articulation M1 et chacune des biellettes 18 est reliée en une première extrémité E1 à un volet d'obturation 17 respectif et en une deuxième extrémité E2 à la structure interne fixe 13.

En jet inversé, les volets d'obturation 17 sont ainsi dans une position déployée de manière à dévier vers les grilles 15 une partie représentant dans cet exemple sensiblement la totalité du flux secondaire 10B (voir figure 3).

De manière connue en soi, les grilles 15 comprennent un aubage permettant de diriger le flux secondaire 10B traversant ces grilles 15 vers l'avant de l'ensemble propulsif 1.

Dans cette configuration d'inversion de poussée, le flux secondaire 10B génère ainsi une contre-poussée de freinage de l'aéronef.

Pour modifier la configuration de l'inverseur 12, celui-ci comprend des actionneurs tels que des vérins (non représentés) configurés pour déplacer le capot mobile 16 entre la position de fermeture et la position d'ouverture. Ces vérins sont dans cet exemple portés par le cadre avant 14 et sont reliés au capot mobile 16 de manière à exercer sur celui-ci un effort de poussée ou de traction, pour le déplacer respectivement de l'amont vers l'aval ou de l'aval vers l'amont.

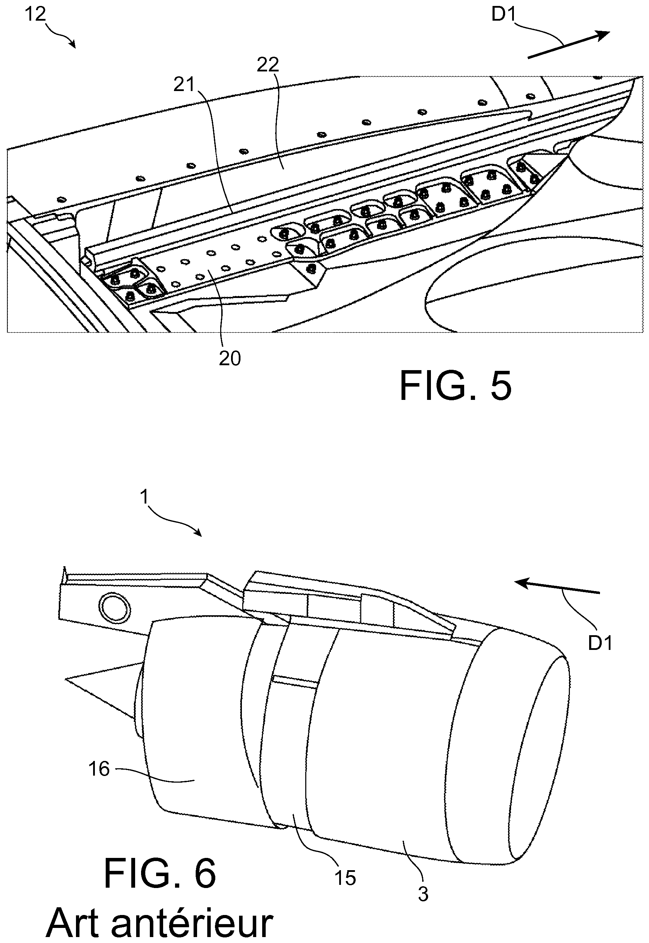

Dans le mode de réalisation des figures 4 et 5, le guidage du capot mobile 16 lors de son déplacement entre les positions de fermeture et d'ouverture est réalisé par une glissière 20, solidaire du capot mobile 16, cette glissière 20 coopérant avec un rail 21 porté par une structure de maintien 22 constituant l'un desdits éléments fixes de l'inverseur 12.

En position d'ouverture, le capot mobile 16, en porte-à-faux sur le rail 21, est axialement retenu par les actionneurs.

En cas de rupture d'un actionneur, par exemple, et d'absence de mécanisme complémentaire permettant de retenir axialement le capot mobile 16 en position d'ouverture, il existe un risque de basculement de ce capot mobile 16 sous l'action des contraintes aérodynamiques auxquelles celui-ci est soumis. Dans un tel cas, le capot mobile 16 peut prendre une position de basculement telle qu'illustrée à la figure 6, cette dernière montrant un ensemble propulsif 1 de l'art antérieur dépourvu de mécanisme de rétention axiale complémentaire.

Dans une telle position de basculement, le capot mobile 16 peut être coincé et entraver ainsi son déplacement vers la position de fermeture, et peut générer un phénomène de broutage lors de l'initiation de la course de fermeture sous l'action de la traction exercée par le ou les autres actionneurs encore opérationnels, en particulier dans le cas où le moment appliqué au capot se traduit par des efforts radiaux sur les rails et par une augmentation des frottements de façon irréversible.

Pour pallier de tels inconvénients, l'inverseur 12 de l'invention comprend au moins un organe d'amorçage 23 configuré pour exercer sur le capot mobile 16 un effort d'amorçage de la course de fermeture.

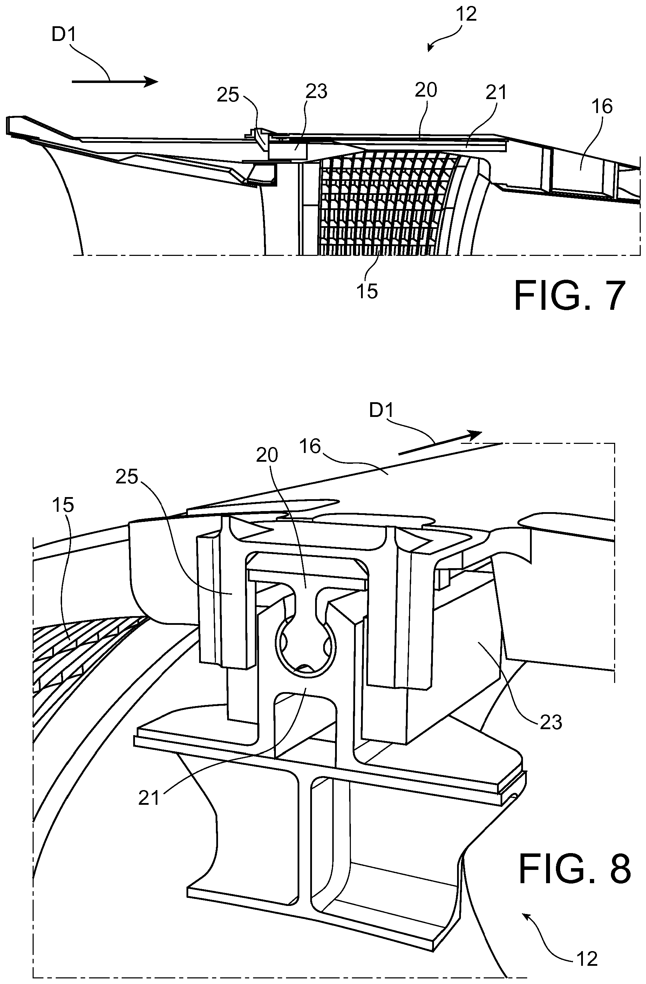

Les figures 7 à 12 se rapportent à un premier type de modes de réalisation dans lesquels l'au moins un organe d'amorçage 23 est passif.

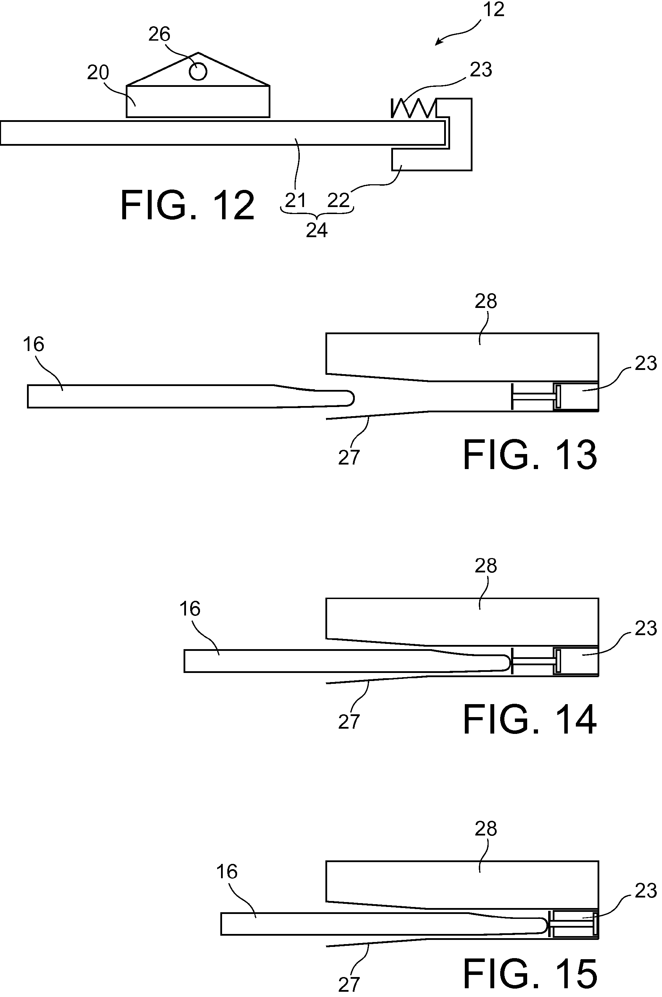

Les figures 13 à 15 se rapportent à un deuxième type de modes de réalisation dans lesquels l'au moins un organe d'amorçage 23 est actif.

La description qui suit concerne un unique organe d'amorçage 23. Les principes qui en découlent peuvent bien entendu être appliqués à plusieurs organes d'amorçage d'un même inverseur 12.

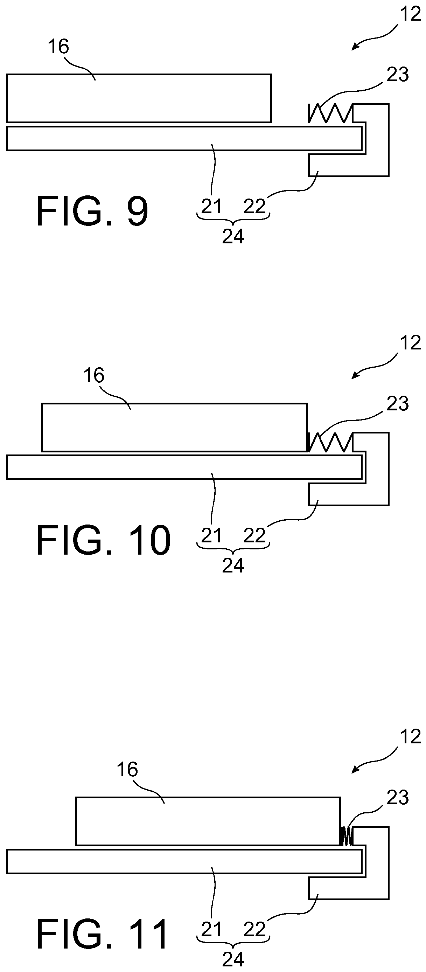

En référence à la figure 9, un organe d'amorçage 23 tel qu'un ressort est interposé entre le capot mobile 16 et une structure fixe 24 de l'inverseur 12.

Dans cet exemple, l'organe d'amorçage 23 est fixé à la structure fixe 24 de l'inverseur 12, plus précisément à la structure de maintien 22 portant le rail 21 (voir figure 5 et description correspondante ci-dessus).

En position de fermeture (figure 9), le capot mobile 16 est écarté de l'organe d'amorçage 23 et n'est donc pas en contact avec cet organe 23. Autrement dit, l'organe d'amorçage 23 est désolidarisé du capot mobile 16 en position de fermeture.

Lorsque les actionneurs déplacent le capot mobile 16 de la position de fermeture vers la position d'ouverture, le capot mobile 16 atteint une position intermédiaire au cours de cette course d'ouverture dans laquelle une extrémité - aval dans cet exemple - du capot mobile 16 entre en contact avec l'organe d'amorçage 23 (figure 10).

En poursuivant sa course d'ouverture jusqu'à la position d'ouverture illustrée à la figure 11, le capot mobile 16 coopère avec l'organe d'amorçage 23 tel que décrit ci-après.

L'organe d'amorçage 23 étant dans cet exemple un ressort, celui-ci amortit le capot mobile 16 dans une phase terminale de la course d'ouverture, en l'occurrence de la position intermédiaire (figure 10) jusqu'à la position d'ouverture (figure 11) du capot mobile 16.

De plus, lors de cette phase terminale de la course d'ouverture, l'organe d'amorçage 23 accumule de l'énergie mécanique en étant comprimé entre le capot mobile 16 et la structure fixe 24.

Il résulte de ce qui précède que l'organe d'amorçage 23 forme une butée de fin de course d'ouverture limitant le déplacement du capot mobile 16 lorsque celui-ci atteint la position d'ouverture.

Les actionneurs sont configurés pour maintenir le capot mobile 16 en position d'ouverture pendant la durée d'inversion de poussée requise.

Pour faire revenir l'inverseur 12 dans la configuration de jet direct, une unité de commande (non représentée) est configurée pour piloter les actionneurs de manière à déplacer le capot mobile 16 de la position d'ouverture (figure 11) jusqu'à la position de fermeture (figure 9).

Par exemple, lors d'une phase initiale de la course de fermeture, les actionneurs peuvent être pilotés de telle manière que l'énergie mécanique accumulée par l'organe d'amorçage 23 soit restituée de manière à produire ledit effort d'amorçage et de sorte que cet effort d'amorçage entraîne en tant que tel un déplacement du capot mobile 16 de la position d'ouverture (figure 11) jusqu'à la position intermédiaire (figure 10).

A l'issue de cette phase initiale de la course de fermeture, les actionneurs peuvent être pilotés pour déplacer le capot mobile 16 de la position intermédiaire (figure 10) jusqu'à la position de fermeture (figure 9).

L'organe d'amorçage 23 est donc configuré pour coopérer avec le capot mobile 16 au cours de la phase initiale de la course de fermeture, en exerçant au cours de cette phase initiale un effort d'amorçage. L'organe d'amorçage 23 est en outre configuré pour être désolidarisé du capot mobile 16 au cours d'une phase ultérieure de la course de fermeture.

Les figures 7 et 8 montrent un exemple d'inverseur doté d'un organe d'amorçage 23 passif tel que décrit ci-dessus. Dans cet exemple, la glissière 20 solidaire du capot mobile 16 forme une butée amont 25 qui coopère, en fin de course d'ouverture et en début de course de fermeture, avec l'organe d'amorçage 23, ce dernier étant solidaire du rail 21 porté par la structure de maintien 22 de la structure fixe 24 de l'inverseur 12.

Dans le mode de réalisation de la figure 12, il est prévu d'autoriser un débattement angulaire du capot mobile 16 par rapport à la structure fixe 24 de l'inverseur 12. Pour ce faire, le capot mobile 16 comprend d'une part une glissière 20 du type décrit ci-dessus, et d'autre part une partie formant un carénage relié à la glissière 20 selon une liaison pivot 26. Une telle liaison pivot 26 autorise un déplacement du carénage par rapport à la glissière 20 en rotation autour d'un axe qui est dans cet exemple perpendiculaire à la direction de déplacement du capot mobile 16 ainsi qu'à l'axe central longitudinal A1.

Dans cet exemple, la glissière 20 forme un organe de liaison du carénage du capot mobile 16 avec la structure fixe 24, et réciproquement le rail 21 forme un organe de liaison correspondant de la structure fixe 24 avec le capot mobile 16, de sorte que la coopération de la glissière 20 et du rail 21 assure le guidage du capot mobile 16 entre les positions de fermeture et d'ouverture tout en autorisant un débattement angulaire de son carénage par rapport à la structure fixe 24.

Il est décrit ci-après le mode de réalisation des figures 13 à 15, qui se distingue notamment de celui des figures 9 à 11 en ce que l'organe d'amorçage 23 est un organe actif de type vérin.

En référence à la figure 13, la structure fixe de l'inverseur 12 comprend un rail 28 pourvu d'une ouverture 27 configurée pour recevoir une partie du capot mobile 16, au moins dans certaines positions du capot mobile 16.

Dans cet exemple, l'organe d'amorçage 23 est fixé au rail 28 de l'inverseur 12, en étant logé dans un fond de l'ouverture 27.

En position de fermeture (figure 13), le capot mobile 16 est écarté de l'organe d'amorçage 23 et n'est donc pas en contact avec cet organe 23. Autrement dit, l'organe d'amorçage 23 est désolidarisé du capot mobile 16 en position de fermeture.

Lorsque les actionneurs déplacent le capot mobile 16 de la position de fermeture vers la position d'ouverture, le capot mobile 16 atteint une position intermédiaire au cours de cette course d'ouverture dans laquelle une extrémité de ce capot 16 entre en contact avec l'organe d'amorçage 23 (figure 14).

En poursuivant la course d'ouverture jusqu'à la position d'ouverture illustrée à la figure 15, l'organe d'amorçage 23 coopère avec le capot mobile 16 tel que décrit ci-après.

L'organe d'amorçage 23 est dans cet exemple un vérin permettant d'amortir le capot mobile 16 dans une phase terminale de la course d'ouverture, en l'occurrence de la position intermédiaire (figure 14) jusqu'à la position d'ouverture (figure 15) du capot mobile 16. L'amortissement résulte de l'évacuation progressive d'un fluide tel qu'un gaz contenu dans la chambre du vérin 23, sous l'action du déplacement relatif du capot mobile 16 et du rail 28.

Lorsque le capot mobile 16 atteint la position d'ouverture, la chambre ne contient plus de fluide, et l'organe d'amorçage 23 forme ainsi une butée de fin de course d'ouverture limitant le déplacement du capot mobile 16.

Dans cet exemple, l'organe d'amorçage 23 n'accumule pas d'énergie mécanique lors de cette phase terminale de la course d'ouverture, l'augmentation de la pression dans la chambre nécessitant une commande d'injection de fluide.

Pour replacer l'inverseur 12 en configuration de jet direct, les actionneurs et l'organe d'amorçage 23 sont respectivement pilotés par une unité de commande de manière à déplacer le capot mobile 16 de la position d'ouverture (figure 15) jusqu'à la position de fermeture (figure 13).

Par exemple, lors d'une phase initiale de la course de fermeture, l'organe d'amorçage 23 est piloté pour produire l'effort d'amorçage de manière à déplacer le capot mobile 16 de la position d'ouverture (figure 15) jusqu'à la position intermédiaire (figure 14).

A l'issue de cette phase initiale, les actionneurs peuvent être pilotés pour déplacer le capot mobile 16 de la position intermédiaire (figure 14) jusqu'à la position de fermeture (figure 13).

Dans cet exemple, l'organe d'amorçage 23 est donc configuré pour coopérer avec le capot mobile 16 au cours de la phase initiale de la course de fermeture en exerçant au cours de cette phase initiale un effort d'amorçage. L'organe d'amorçage 23 est en outre configuré pour être désolidarisé du capot mobile 16 au cours d'une phase ultérieure de la course de fermeture.

Dans un mode de réalisation, l'unité de commande peut être programmée pour piloter un ou plusieurs actionneurs et/ou l'au moins un organe d'amorçage 23 en fonction de la configuration effective du capot mobile 16, laquelle peut être évaluée à l'aide d'un moyen de détection. Une telle servocommande permet d'optimiser la fermeture du capot mobile 16.

Dans chacun des modes de réalisation décrits ci-dessus, il est mis en œuvre un procédé de fermeture du capot mobile 16 dans laquelle sont réalisées une étape d'amorçage de la course de fermeture et une étape, de préférence consécutive, d'actionnement des actionneurs.

Lors de l'étape d'amorçage, l'organe d'amorçage 23 exerce un effort d'amorçage sur le capot mobile 16 de manière à déplacer le capot mobile 16 de la position d'ouverture jusqu'à une position intermédiaire située entre la position d'ouverture et la position de fermeture, ou éventuellement de manière à repositionner correctement le capot mobile 16 dans la position d'ouverture.

Lors de l'étape d'actionnement, les actionneurs déplacent le capot mobile 16 vers la position de fermeture au moins à partir de ladite position intermédiaire.

## Revendications

1. Inverseur de poussée (12) pour ensemble propulsif (1) d'aéronef, cet inverseur (12) comprenant une structure fixe (24, 28) et une structure externe mobile (16), cet inverseur (12) étant configuré pour être placé dans :
- une configuration de jet direct dans laquelle la structure externe mobile (16) est dans une position de fermeture, la structure externe mobile (16) en position de fermeture étant configurée pour guider un écoulement de fluide dans l'ensemble propulsif (1) de manière à générer une poussée,
- une configuration de jet inversé dans laquelle la structure externe mobile (16) est dans une position d'ouverture, la structure externe mobile (16) en position d'ouverture dégageant une ouverture radiale (15) apte à évacuer une partie dudit écoulement de fluide de l'ensemble propulsif (1) de manière à générer une contre-poussée,
cet inverseur (12) comprenant au moins un actionneur configuré pour déplacer la structure externe mobile (16) entre la position de fermeture et la position d'ouverture, cet inverseur (12) comprenant au moins un organe d'amorçage (23),
distinct de l'au moins un actionneur, configuré pour exercer sur la structure externe mobile (16) un effort d'amorçage d'une course de fermeture dans laquelle la structure externe mobile (16) est déplacée de la position d'ouverture vers la position de fermeture, l'au moins un organe d'amorçage (23) étant solidaire de l'une parmi la structure fixe (24, 28) et la structure externe mobile (16), l'au moins un organe d'amorçage (23) étant configuré pour :
- coopérer avec l'autre parmi la structure fixe (24, 28) et la structure externe mobile (16) au cours d'une phase initiale de la course de fermeture, l'au moins un organe d'amorçage (23) étant configuré pour exercer ledit effort d'amorçage au cours de cette phase initiale,
- être désolidarisé de l'autre parmi la structure fixe (24, 28) et la structure externe mobile (16) au cours d'une phase ultérieure de la course de fermeture de la structure externe mobile (16),
cet inverseur étant **caractérisé en ce que** ladite structure fixe comprend un rail (28) pourvu d'une ouverture (27) configurée pour recevoir une partie du capot mobile (16), l'organe d'amorçage (23) étant fixé au rail (28) dudit inverseur (12) et étant logé dans un fond de l'ouverture (27),
et ledit organe d'amorçage comprend un vérin (23) permettant d'amortir le capot mobile (16) dans une phase terminale d'une course d'ouverture dans laquelle ledit capot mobile (16) passe d'une position intermédiaire à une position d'ouverture dudit capot mobile (16), l'amortissement étant réalisé par évacuation progressive d'un fluide contenu dans une chambre dudit vérin (23) sous l'action d'un déplacement relatif dudit capot mobile (16) et dudit rail (28), ledit vérin (23) étant configuré pour coopérer avec ledit capot mobile (16) au cours de ladite phase initiale de la course de fermeture en exerçant au cours de cette phase initiale ledit effort d'amorçage.

2. Inverseur (12) selon la revendication 1, dans lequel l'au moins un organe d'amorçage (23) forme une butée de fin de course d'ouverture limitant le déplacement de la structure externe mobile (16) dans la position d'ouverture.

3. Inverseur (12) selon l'une des revendications 1 ou 2, dans lequel l'au moins un organe d'amorçage (23) est configuré pour amortir la structure externe mobile (16) lors de son déplacement vers la position d'ouverture.

4. Inverseur (12) selon l'une quelconque des revendications 1 à 3, dans lequel l'au moins un organe d'amorçage (23) est configuré pour accumuler de l'énergie mécanique lorsque la structure externe mobile (16) est déplacée vers la position d'ouverture et pour restituer l'énergie mécanique ainsi accumulée de manière à exercer ledit effort d'amorçage.

5. Inverseur (12) selon la revendication 4, dans lequel l'au moins un organe d'amorçage (23) comprend au moins un ressort configuré pour accumuler et restituer ladite énergie mécanique.

6. Inverseur (12) selon l'une quelconque des revendications 1 à 5, dans lequel l'au moins un organe d'amorçage (23) comprend au moins un vérin configuré pour exercer ledit effort d'amorçage.

7. Inverseur (12) selon l'une quelconque des revendications 1 à 6, dans lequel la structure externe mobile (16) comprend un carénage et au moins un organe de liaison (20) du carénage avec la structure fixe (24), l'au moins un organe de liaison (20) de la structure externe mobile (16) coopérant avec au moins un organe de liaison (21) correspondant de la structure fixe (24) de manière à guider le déplacement de la structure externe mobile (16) entre la position de fermeture et la position d'ouverture selon une direction axiale (A1), la structure externe mobile (16) étant configurée pour autoriser un déplacement du carénage par rapport à l'au moins un organe de liaison (20) de cette structure externe mobile (16) en rotation autour d'un axe perpendiculaire à ladite direction axiale (A1).

8. Ensemble propulsif (1) d'aéronef, cet ensemble propulsif (1) comprenant un inverseur de poussée (12) selon l'une quelconque des revendications précédentes.

9. Procédé de fermeture d'une structure externe mobile (16) d'un inverseur de poussée (12) selon l'une quelconque des revendications 1 à 7, ce procédé comprenant :
- une étape d'amorçage d'une course de fermeture de la structure externe mobile (16) au cours de laquelle l'au moins un organe d'amorçage (23) exerce ledit effort d'amorçage sur la structure externe mobile (16),
- une étape d'actionnement de l'au moins un actionneur de manière à déplacer la structure externe mobile (16) vers la position de fermeture.

## Patentansprüche

1. Schubumkehrvorrichtung (12) für eine Luftfahrantriebseinheit (1), wobei diese Schubumkehrvorrichtung (12) eine feste Struktur (24, 28) und eine bewegliche Außenstruktur (16) umfasst, wobei die Schubumkehrvorrichtung (12) dazu eingerichtet ist, in
- eine Direktstrahlkonfiguration gebracht zu werden, in welcher sich die bewegliche Außenstruktur (16) in einer Schließstellung befindet, wobei die bewegliche Außenstruktur (16) in der Schließstellung dazu eingerichtet ist, einen Fluidstrom in der Antriebseinheit (1) zu führen, um einen Schub zu erzeugen,
- eine Umkehrstrahlkonfiguration gebracht zu werden, in welcher sich die bewegliche Außenstruktur (16) in einer Offenstellung befindet, wobei die bewegliche Außenstruktur (16) in der Offenstellung eine radiale Öffnung (15) freigibt, die dazu geeignet ist, einen Teil des Fluidstroms aus der Antriebseinheit (1) auszuleiten, um einen Gegenschub zu erzeugen, wobei die Schubumkehrvorrichtung (12) mindestens einen Aktuator umfasst, der dazu eingerichtet ist, die bewegliche Außenstruktur (16) zwischen der Schließstellung und der Offenstellung zu bewegen,
wobei die Schubumkehrvorrichtung (12) **dadurch gekennzeichnet ist, dass** sie mindestens einen Initiator (23) umfasst, der vom mindestens einen Aktuator verschieden ist und dazu eingerichtet ist, auf die bewegliche Außenstruktur (16) eine Kraft auszuüben, um einen Schließweg einzuleiten, bei dem die bewegliche Außenstruktur (16) von der Offenstellung in die Schließstellung bewegt wird,
wobei der mindestens eine Initiator (23) mit einer der festen Struktur (24, 28) und der beweglichen Außenstruktur (16) fest verbunden ist, und der mindestens eine Initiator (23) dazu eingerichtet ist,
- während einer Anfangsphase des Schließwegs mit der jeweils anderen der festen Struktur (24, 28) und der beweglichen Außenstruktur (16) zusammenzuwirken, wobei der mindestens eine Initiator (23) dazu eingerichtet ist, während dieser Anfangsphase die genannte Einleitungskraft auszuüben,
- während einer nachfolgenden Phase des Schließwegs der beweglichen Außenstruktur (16) von der jeweils anderen der festen Struktur (24, 28) und der beweglichen Außenstruktur (16) getrennt zu sein,
wobei die Schubumkehrvorrichtung (12) **dadurch gekennzeichnet ist, dass** die feste Struktur eine Schiene (28) umfasst, die mit einer Öffnung (27) versehen ist, welche dazu eingerichtet ist, einen Teil der beweglichen Verkleidung (16) aufzunehmen,
wobei der Initiator (23) an der Schiene (28) der Schubumkehrvorrichtung (12) befestigt ist und dabei im Boden der Öffnung (27) untergebracht ist,
wobei der Initiator (23) einen Zylinder (23) umfasst, der dazu dient, die bewegliche Verkleidung (16) in einer Endphase eines Öffnungswegs der genannten beweglichen Verkleidung (16), in welcher sich die bewegliche Verkleidung (16) von einer Zwischenstellung in eine Offenstellung bewegt, abzubremsen,
wobei das Abbremsen durch eine progressive Entleerung eines in einer Kammer des genannten Zylinders (23) enthaltenen Fluids erfolgt, unter Einwirkung der Relativbewegung der beweglichen Verkleidung (16) und der Schiene (28),
wobei der Zylinder (23) dazu eingerichtet ist, während einer Anfangsphase des Schließwegs mit der genannten beweglichen Verkleidung (16) zusammenzuwirken, um während dieser Anfangsphase das genannte Abbremsen zu erzeugen.

2. Schubumkehrvorrichtung (12) nach Anspruch 1, wobei der mindestens eine Initiator (23) einen Endanschlag des Öffnungswegs bildet, der die Bewegung der beweglichen Außenstruktur (16) in der Offenstellung begrenzt.

3. Schubumkehrvorrichtung (12) nach einem der Ansprüche 1 oder 2, wobei der mindestens eine Initiator (23) dazu eingerichtet ist, die bewegliche Außenstruktur (16) beim Bewegen in die Offenstellung abzubremsen.

4. Schubumkehrvorrichtung (12) nach einem der Ansprüche 1 bis 3, wobei der mindestens eine Initiator (23) dazu eingerichtet ist, mechanische Energie zu speichern, wenn die bewegliche Außenstruktur (16) in die Offenstellung bewegt wird, und die so gespeicherte mechanische Energie wieder freizusetzen, um die genannte Einleitungskraft auszuüben.

5. Schubumkehrvorrichtung (12) nach Anspruch 4, wobei der mindestens eine Initiator (23) mindestens eine Feder umfasst, die dazu eingerichtet ist, die genannte mechanische Energie zu speichern und wieder freizusetzen.

6. Schubumkehrvorrichtung (12) nach einem der Ansprüche 1 bis 5, wobei der mindestens eine Initiator (23) mindestens einen Zylinder umfasst, der dazu eingerichtet ist, die genannte Einleitungskraft auszuüben.

7. Schubumkehrvorrichtung (12) nach einem der Ansprüche 1 bis 6, wobei die bewegliche Außenstruktur (16) eine Verkleidung und mindestens ein Verbindungselement (20) zum Verbinden der Verkleidung mit der festen Struktur (24) umfasst, wobei das mindestens eine Verbindungselement (20) der beweglichen Außenstruktur (16) mit mindestens einem entsprechenden Verbindungselement (21) der festen Struktur (24) zusammenwirkt, um die Bewegung der beweglichen Außenstruktur (16) zwischen der Schließstellung und der Offenstellung in einer axialen Richtung (A1) zu führen, wobei die bewegliche Außenstruktur (16) dazu eingerichtet ist, eine Drehbewegung der Verkleidung relativ zu dem mindestens einen Verbindungselement (20) dieser beweglichen Außenstruktur (16) um eine Achse senkrecht zur genannten axialen Richtung (A1) zu ermöglichen.

8. Luftfahrantriebseinheit (1), wobei diese Antriebseinheit (1) eine Schubumkehrvorrichtung (12) nach einem der vorhergehenden Ansprüche umfasst.

9. Verfahren zum Schließen einer beweglichen Außenstruktur (16) einer Schubumkehrvorrichtung (12) nach einem der Ansprüche 1 bis 7, wobei das Verfahren umfasst:
- einen Schritt des Einleitens eines Schließwegs der beweglichen Außenstruktur (16), während dessen der mindestens eine Initiator (23) die genannte Einleitungskraft auf die bewegliche Außenstruktur (16) ausübt,
- einen Schritt des Betätigens mindestens eines Aktuators, um die bewegliche Außenstruktur (16) in die Schließstellung zu bewegen.

## Claims

1. A thrust reverser (12) for an aircraft propulsion unit (1), this reverser (12) comprising a fixed structure (24, 28) and a mobile external structure (16), this reverser (12) being configured to be placed in:
- a direct jet configuration wherein the mobile external structure (16) is in a closed position, the mobile external structure (16) in the closed position being configured to guide a flow of fluid in the propulsion unit (1) so as to generate a thrust,
- a reverse jet configuration wherein the mobile external structure (16) is in an open position, the mobile external structure (16) in the open position releasing a radial opening (15) capable of discharging a portion of said fluid flow from the propulsion unit (1) so as to generate a counter-thrust,
this reverser (12) comprising at least one actuator configured to move the mobile external structure (16) between the closed position and the open position, this reverser (12) being **characterised in that** it comprises at least one initiator (23), distinct from the at least one actuator, configured to exert on the mobile external structure (16) a force to initiate a closing travel wherein the mobile external structure (16) is moved from the open position to the closed position,
the at least one initiator (23) is integral with one of the fixed structure (24, 28) and the mobile external structure (16), the at least one initiator (23) being configured to:
- cooperate with the other of the fixed structure (24, 28) and the mobile external structure (16) during an initial phase of the closing travel, the at least one initiator (23) being configured to exert said initiation force during this initial phase,
- be separated from the other of the fixed structure (24, 28) and the mobile external structure (16) during a subsequent phase of the closing travel of the mobile external structure (16).
the thrust reverser (12) being **characterized in that** said fixed structure comprises a rail (28) provided with an opening (27) configured to receive a portion of the mobile cowl (16), the initiator (23) being fixed to the rail (28) of the reverser (12) while being housed in a bottom of the opening (27), said initiator (23) comprising a cylinder (23) allowing to dampen the mobile cowl (16) in an end phase of an opening travel of said mobile cowl (16) in which said mobile cowl (16) moves from an intermediate position to an open position of the mobile cowl (16), the damping resulting from a progressive discharge of a fluid contained in a chamber of said cylinder (23), under the action of the relative movement of the mobile cowl (16) and of the rail (28), said cylinder (23) being configured to cooperate with said mobile cowl (16) during an initial phase of the closing travel to produce during this initial phase said damping.

2. The reverser (12) according to claim 1, wherein the at least one initiator (23) forms an end-of-opening travel stop limiting the movement of the mobile external structure (16) in the open position.

3. The reverser (12) according to any one of claims 1 or 2, wherein the at least one initiator (23) is configured to dampen the mobile external structure (16) as it moves to the open position.

4. The reverser (12) according to any one of claims 1 to 3, wherein the at least one initiator (23) is configured to accumulate mechanical energy when the mobile external structure (16) is moved to the open position and to restore the mechanical energy thus accumulated so as to exert said initiation force.

5. The reverser (12) according to claim 4, wherein the at least one initiator (23) comprises at least one spring configured to accumulate and restore said mechanical energy.

6. The reverser (12) according to any one of claims 1 to 5, wherein the at least one initiator (23) comprises at least one cylinder configured to exert said initiation force.

7. The reverser (12) according to any one of claims 1 to 6, wherein the mobile external structure (16) comprises a fairing and at least one member (20) for connecting the fairing with the fixed structure (24), the at least one connecting member (20) of the mobile external structure (16) cooperating with at least one corresponding connecting member (21) of the fixed structure (24) so as to guide the movement of the mobile external structure (16) between the closed position and the open position in an axial direction (A1), the mobile external structure (16) being configured to allow rotational movement of the fairing relative to the at least one connecting member (20) of this mobile external structure (16) about an axis perpendicular to said axial direction (A1).

8. An aircraft propulsion unit (1), this propulsion unit (1) comprising a thrust reverser (12) according to any one of the preceding claims.

9. A method for closing a mobile external structure (16) of a thrust reverser (12) according to any one of claims 1 to 7, this method comprising:
- a step of initiating a closing travel of the mobile external structure (16) during which the at least one initiator (23) exerts said initiation force on the mobile external structure (16),
- a step of actuating at least one actuator so as to move the mobile external structure (16) to the closed position.
